# EUROPÄISCHE PATENTANMELDUNG

(11) **EP 1 566 402 A2**
(43) Veröffentlichungstag der Anmeldung: **24.08.2005**
(21) Anmeldenummer: 05003133.5
(22) Anmeldetag: 15.02.2005
(51) Int. Cl.: C08K 3/00

(54) **Mineralien- oder edelsteinhaltiger Formkörper**

(30) Priorität: 19.02.2004 DE 202004002722 U
(71) Anmelder: Siller, Martin, 83098 Brannenburg (DE)
(72) Erfinder: Siller, Martin, 83098 Brannenburg (DE)

(57) **Zusammenfassung**

Die vorliegende erfindung betrifft einen Formkörper, welcher neben einem oder mehreren abgewandelten Naturstoffen oder synthetischen Kunststoffen einen oder mehrere kleine Körper (Partikel, Teilchen) enthält, welche ausgewählt sind aus der Gruppe der Mineralien oder Edelsteine.

## Beschreibung

Die vorliegende Erfindung betrifft einen Kunststoff, welcher partikelartige kleine Körper, vorzugsweise mehlartige Partikel von Edelsteinen oder Mineralien, umfaßt sowie aus diesem Kunststoff hergestellte Waren, mit den im Oberbegriff des Patentanspruches 1 angegebenen Merkmalen.

Aus dem Stand der Technik ist es bekannt, in einer Kunststoff-Matrix Glasfasern oder Kohlenstofffasern zu Verstärkungszwecken einzubetten.

Diese bekannten glasfaser- oder kohlenstofffaserverstärkten Kunststoffe sind insbesondere deswegen nachteilig, weil ihre mechanische Abriebfestigkeit aufgrund der faserigen Modifikation und der chemischen Zusammensetzung der Verstärkungsmaterialien nur gering ist.

Von weiterem Nachteil ist im Falle der aus dem Stand der Technik bekannten Kunststoffe mit Glasfaser- oder Kohlenstofffaser-Verstärkung, daß deren Wärmeisolationsvermögen wegen ihrer ausgeprägten Wärmeleitfähigkeit sehr gering ist.

Von besonderem Nachteil ist im Falle der aus dem Stand der Technik bekannten Kunststoffe mit Glasfaser- oder Kohlenstofffaser-Verstärkung schließlich deren hoher Wärmeausdehnungskoeffizient, welcher ihren Einsatz bei der Herstellung beispielsweise von langdimensionierten Bauteilen, welche wechselnden (Außen-) Temperaturen ausgesetzt sind, verbietet.

Aufgabe der vorliegenden Erfindung ist daher die Bereitstellung eines Kunststoffes und hieraus hergestellter Waren, welche in ihrem ausgehärteten Zustand über eine hervorragende mechanische Abriebfestigkeit verfügen, deren Wärmeisolationseigenschaften aufgrund eines niedrigen Wärmedurchgangskoeffizienten besonders ausgeprägt sind und deren Wärmeausdehnungskoeffizienten besonders niedrig liegen.

Erfindungsgemäß wird diese Aufgabe bei einem gattungsgemäßen mineralienhaltigen Formkörper durch die im kennzeichnenden Teil des Patentanspruchs 1 angegebenen Merkmale gelöst.

Besonders bevorzugte Ausführungsformen sind Gegenstand der Unteransprüche.

Bei dem Gegenstand der vorliegenden Erfindung handelt es sich einen Kunststoff beziehungsweise einen daraus hergestellten Formkörper, welcher zusätzlich zu einem oder mehreren abgewandelten Naturstoffen oder synthetischen Kunststoffen einen oder mehrere kleine Körper (Partikel, Teilchen) vorzugsweise von Mineralien oder Edelsteinen enthält.

Diese kleinen Körper (Partikel, Teilchen) können beispielsweise ausgewählt sein aus der Gruppe, die Achat, Adular, afrikanische Jade, Aktinolith, Alexandrit, Almandin, Amazonit, Amethyst, Ametrin, Amorspfeil, Amphibol, Andalusit, Andenopal, Andradit, Anhydrit, Antimonit, Apachentränen, Apatit, Apophyllit, Aprikosenachat, Aquamarin, Aragonit, Astrophyllit, Augenachat, Augit, australischer Rhyolith, Australit, Aventurin, Azurit, Azur-Malachit, Bandachat, Baryt, Bediasit, Bergkristall, Bernstein, Beryll, Billitonit, Biotit, Bixbit, Blue John, Blutjaspis, böhmischer Granat, Bornit, Botswana-Achat, Boulder-Opal, Brasilianit, Bronzit, Bytownit, Calcit, Cavansit, Chalcedon, Chalcedonrose, Chiastolith, Chloropal, Chromdiopsid, Chrysoberyll, Chrysokoll, Chrysolith, Chrysopal, Chrysopras, Citrin, Coelestin, Cordierit, Covellin, Cyanit, Cymophan, Demantoid, Dendritenachat, Dendritenchalcedon, Dendritopal, Diamant, Diopsid, Dioptas, Disthen, Dolomit, Dravit, Dumortierit, Edelopal, Eisenkiesel, Eisenmeteorit, Eisenquarz, Elbait, Enstatit, Epidot, Eudialyt, Euklas, Falkenauge, Fernsehstein, Feuerachat, Feueropal, Feuerstein, Fleischopal, Flint, Fluorit, fossiles Baumharz, Friedensachat, Fuchsit, Gagat, Galenit, Girasol, Gold, Granat, Grossular, Hämatit, Halit, Heliodor, Heliotrop, Herkimer-Quarz, Hermanover Kugeln, Hessonit, Hiddenit, Holzopal, Hornstein, Howlith, Hyalit, Hyazinth, Imperial, Indigolith, Indochinit, lolith, Irgisit, Isländischer Kalk, Ivorit, Jadeit, Jargon, Jaspis, Javait, Karneol, Kascholong, Kassiterit, Kieselholz, Korallen, Kunzit, Kupfer, Kupferchalcedon, Kupferlasur, Labradorit, Lace-Achat, Landschaftsjaspis, Lapislazuli, Larimar, Lasurit, Lazulith, Lebende Steine, Leopardenjaspis, Lepidolith, Libysches Glas, Liddicoatit, Limonit, Magnesit, Magnetit, Mahagoni-Obsidian, Malachit, Manganocalcit, Markasit, Marmarosch-Diamant, Matura-Diamant, Melanit, Meteorite, Mikroklin, Milchopal, Milchquarz, Moldavit, Mondstein, Mookait, Moosachat, Moosopal, Moqui Marbles, Morganit, Morion, Muskovit, Nephrit, Obsidian, Oligoklas, Olivin, Onyx, Opal, Orthoklas, Padparadscha, Pektolith, Peridot, Perlen, Petalit, Phantomquarz, Philippinit, Pietersit, Plagioklas, Plasma, Platin, Pleonast, Popjaspis, Porzellanit, Prasem, Prasopal, Purpurit, Pyknit, Pyrit, Pyromorphit, Pyrop, Quarz, Quarz-Katzenauge, Quarzsubstanzen, Rauchquarz, Regebogen-Obsidian, Rhodochrosit, Rhodolith, Rhodonit, Rhyolith, Rizalit, Rosenquarz, Rubellit, Rubin, Rutil, Rutilquarz, Sagenit, Saphir, Sarder, Sardonyx, Schneeflocken-Obsidian, Schörl, Schwarzer Opal, Schwefel, Selenit, Septarien, Serpentin, Siderit, Silber, Skelettquarz, Smaragd, Smithsonit, Sodalith, Sonnenstein, Spektrolith, Spessartin, Sphalerit, Shen, Spinell, Spodumen, Starlit, Staurolith, Steinsalz, Sternachat, Sternsaphir, Stierauge, Sugilith, Tansanit, Tektite, Thulit, Tigerauge, Tigereisen, Titanit, Topas, Topas Imperial, Trümmerachat, Tsavorit, Tscharoit, Türkis, Turitella-Achat, Turmalin, Turmalinquarz, Ulexit, Unakit, Uvit, Uwarowit, Vanadinit, Variscit, Venushaar, Verdelith, Versteinertes Holz, Vivianit, Vulkanisches Glas, Wachsopal, Watermelon-Turmalin, Wavellit, Wolframit, Wolkenachat, Worobjewit, Wulfenit, Zirkon und Zoisit umfaßt.

Der erfindungsgemäß gegebenenfalls zum Einsatz kommende abgewandelte Naturstoff kann beispielsweise aus der Gruppe, welche Casein-Kunststoffe, Cellulosenitrat, Celluloseacetat, Cellulosemischester und Celluloseether umfaßt, ausgewählt sein.

Der erfindungsgemäß gegebenenfalls zum Einsatz kommende synthetische Kunststoff kann beispielsweise aus der Gruppe, die Polykondensate wie Phenolharz, Harnstoffharz, Thioharnostoffharz, Melaminharz, ungesättigtes Polyesterharz, Alkydharz, Allylharz, Silicon, Polyimid, Polybenzimidazol und Polyamid, Polycarbonat, Polyester, Polyphenylenoxid, Polysulfon, Polyvinylacetal sowie Polymerisate wie Polyethylen, Polypropylen, Poly-1-buten, Poly-4-methyl-1-penten, lonomere, Polyvinylchlorid, Polyvinylidenchlorid, Polymethyl-methacrylat, Polyacrylnitril, Polystyrol, Polyacetal, Fluorkunststoffe, Polyvinylalkohol, Polyvinylacetat, Poly-p-xylylen und Polyaddukte wie Epoxidharz, vernetze Polyurethane, lineare Polyurethane und chlorierte Polyether, umfaßt, ausgewählt sein.

Vorzugsweise ist der erfindungsgemäß gegebenenfalls zum Einsatz kommende Kunststoff beispielsweise aus der Gruppe ausgewählt, die AcrylnitrilButadien-Styrol, Acrylnitril-Methylmethacrylat, Celluloseacetat, Celluloseacetobutyrat, Kresol-Formaldehyd, Carboxymethylcellulose, Casein, Diallylphthalat, Ethylcellulose, Epoxid, expandierbares Polystyrol, Ethylen-Vinylacetat, EthylenVinylalkohol, Tetrafluorethylen-Hexafluorpropylen, Polyethylen hoher Dichte (Hart-PE), Polyethylen niederer Dichte (Weich-PE), Methylmethacrylat-Butadien-Styrol, Methylcellulose, Melamin-Formaldehyd, Polyamid, Polymeres aus ε-Caprolactam, Polykondensat aus Hexamethylendiamin und Adipinsäure, Polyacrylnitril, Polybuten, Polybutylenterephthalat, Polycarbonat, Polychlortrifluorethylen, Polyethylen, chloriertes Polyethylen, Ethylen-Propylen, Polyethylenterephthalat, Phenol-Formaldehyd, Polyimid, Polyisobutylen, Polymethyl-methacrylat, Polyoxymethylen, Polyacetal, Polypropylen, Polyphenylenoxid, Polyphenylensulfid, Polystyrol, Polytetrafluorethylen, Polyurethan, Polyvinylacetat, Polyvinylalkohol, Polyvinylchlorid, Polyvinylidenchlorid, Polyvinylidenfluorid, Polyvinylcarbazol, Polyvinylpyrrolidon, Styrol-Acrylnitril, Polystyrol mit Elastomer auf der Basis von Butadien modifiziert, Silicon, Styrol -α-Methylstyrol, Harnstoff-Formaldehyd und ungesättigte Polyester, umfaßt.

In besonders bevorzugten Ausführungsformen kann der erfindungsgemäße Kunststoff beziehungsweise die aus ihm hergestellten Formkörper zusätzlich einen oder mehrere Farbmittel, Pigmente, optische Aufheller, Blüten- und Pflanzenfarbstoffe, natürliche Farbstoffe oder synthetische Farbstoffe umfassen, welche vorzugsweise in ihrem Farbton in etwa dem ursprünglichen Farbton des Materials der enthaltenen kleinen Körper (Partikel, Teilchen) vor deren Bruch entsprechen.

Der gegebenenfalls zum Einsatz kommende natürliche Farbstoff kann beispielsweise aus der Gruppe ausgewählt sein, welche Anthocyane, Alizarin, Betalaine, Blauholz, Chlorophyll, Chochenille, Curcuma, Hämoglobin, Indigo, Kermes, Krapp, Lackmus, Orlean, antiker Purpur oder Saflor oder Mischungen hiervon umfaßt.

Der gegebenenfalls zum Einsatz kommende synthetische Farbstoff kann beispielsweise aus der Gruppe ausgewählt sein, welche Anilinblau, Anilinschwarz, Anthracenblau, Bismarckbraun, Chrysoidin, Cibablau, Fuchsin, Hydronblau, Immedialschwarz, Kongorot, Kristallviolett, Malachitgrün, Methylenblau, Methylorange, Methylviolett, Variaminblau oder Viktoriablau oder Mischungen hiervon umfaßt.

Bei erfindungsgemäßen Kunststoffen oder daraus hergestellten Formkörpern können der abgewandelte Naturstoff oder der synthetische Kunststoff transparent, opak (undurchsichtig, trübe) oder farbig sein.

Bei bevorzugten Ausführungsformen des erfindungsgemäßen Kunststoffes oder der daraus hergestellten Formkörper kann die Größe der kleinen Körper (Partikel, Teilchen) beispielsweise im Siebmaschenbereich von 0,001 mm bis 25,0 mm, vorzugsweise im Bereich von 0,005 bis 20,0 mm, insbesondere im Bereich von 0,009 bis 17,0 mm, liegen.

Bei besonders bevorzugten Ausführungsformen des erfindungsgemäßen Kunststoffes oder der daraus hergestellten Formkörper weisen die enthaltenen kleinen Körper (Partikel, Teilchen) eine mehlartige Größe auf.

Die Bruchkanten der enthaltenen kleinen Körper (Partikel, Teilchen) können scharfkantig sein. Vorzugsweise sind die Bruchkanten der enthaltenen kleinen Körper (Partikel, Teilchen) jedoch abgerundet.

In besonders bevorzugten Ausführungsformen der erfindungsgemäßen Formkörper überragen die kleinen Körper (Partikel, Teilchen) - nach der Verfestigung des abgewandelten Naturstoffes oder des synthetischen Kunststoffes - die Oberfläche des Formkörpers nach außen hin zumindest etwas.

Alternativ hierzu können die kleinen Körper (Partikel, Teilchen) - nach der Verfestigung des abgewandelten Naturstoffes oder des synthetischen Kunststoffes - gegenüber der Kunststoffoberfläche zumindest etwas zurückgesetzt sein.

Alternativ hierzu können die kleinen Körper (Partikel, Teilchen) - nach der Verfestigung des abgewandelten Naturstoffes oder des synthetischen Kunststoffes - mit der Kunststoffoberfläche bündig abschließen.

Das Gewichtsverhältnis zwischen den Mengen des abgewandelten Kunststoffes oder des synthetischen Kunststoffes einerseits und der Menge der kleinen Körper (Partikel, Teilchen) andererseits kann beispielsweise im Bereich von 1000 zu 1 bis 1 zu 1000, vorzugsweise im Bereich von 600 zu 1 bis 1 zu 600, insbesondere im Bereich von 100 zu 1 bis 1 zu 100, liegen.

Der aus dem erfindungsgemäßen Kunststoff hergestellte Formkörper kann beispielsweise in Form eines Granulates, eines Stranges, eines Stabes, eines Films, eines Anstrichmittels, einer pastösen Masse, einer Folie, einer Platte, einer Kachel, eines Gitters, eines Bandes, einer Kugel, eines Zylinders oder eines massiven oder hohlen Polyeders, ausgebildet sein.

Vorzugsweise ist der erfindungsgemäße Formkörper beispielsweise ausgebildet in Form einer Kupplungsscheibe, eines Zahnrades, einer Führungsrolle, einer Lagerschale, einer Bremsscheibe, von Tafelgeschirr, Kochgeschirr, eines Wärme-Isolations-Behälters, eines Behälters für Haushalt und Küche, einer Vase, einer Handyschale, eines Gehäuses für elektrische oder elektronische Geräte, von Spielzeug, eines Turn- und Sportgerätes, eines Blumenübertopfes, einer Schuheinlage, von Bauteilen von Fahrzeugen zu Lande, zu Wasser oder in der Luft, eines Gegenstandes für die Körper- und Schönheitspflege, eines Möbels, von Baumaterialien, insbesondere langen Bauteilen, welche im Winter beansprucht werden, eines Beleuchtungsmittels, von Brillen, von Schreibgeräten, eines Schlafcontainers, von Sanitär-einrichtungen, chirurgischen, ärztlichen, zahn- und tierärztlichen Instrumenten und Apparaten, künstlichen Gliedmaßen, Augen oder Zähnen, orthopädischen Artikeln, Aquarienkies, Aquaristikzubehör, Terraristikzubehör, Kleintierfreßnäpfen und Kleintierschlafstellen sowie in Form von landwirtschaftlichen Geräten.

In besonders bevorzugten Ausführungsformen können der erfindungsgemäße Kunststoff oder der erfindungsgemäße Formkörper Mischungen von kleinen Körpern (Partikel, Teilchen) gemäß Anspruch 1 und/oder Mischungen von abgewandelten Naturstoffen oder synthetischen Kunststoffen gemäß den Ansprüchen 2, 3 und 4 und/oder Mischungen der Farbstoffe oder Pigmente gemäß den Ansprüchen 5 und 6 umfassen.

Bei einem Verfahren zur Herstellung des erfindungsgemäßen Kunststoffes oder des erfindungsgemäßen Formkörpers können beispielsweise zunächst die kleinen Körper (Teilchen, Partikel) des Anspruchs 1 mit den abgewandelten Naturstoffen des Anspruchs 2 und/oder mit den synthetischen Kunststoffen der Ansprüche 3 und 4 vermischt werden.

Anschließend kann die erhaltene Mischung beispielsweise per Spritzgießen, Strangpressen, Gießen, Pressen, Ziehen, Blasen oder Drücken zu einem Formkörper beispielsweise gemäß den Ansprüchen 12 oder 13 weiterverarbeitet werden.

Zusammenfassend ist festzustellen, daß aufgrund der körnigen beziehungsweise kugeligen Ausbildung der enthaltenen Mineralienpartikel beziehungsweise der Edelsteinpartikel der erfindungsgemäße Kunststoff sowie daraus hergestellte Waren über eine hervorragende mechanische Abriebfestigkeit verfügen.

Schon aufgrund der extrem niedrigen Wärmeaufnahmekapazität von Mineralien kommt dem erfindungsgemäßen Kunststoff darüber hinaus ein besonders ausgeprägtes Wärmeisolationsvermögen zu.

Ein gravierender Vorteil der erfindungsgemäßen Kunststoffe und der daraus hergestellten Waren besteht schließlich darin, daß die enthaltenen kleinen Körper (Partikel, Teilchen) aus den angeführten Mineralien und Edelsteinen einen günstigen Einfluß auf die Gesundheit des Benutzers im Sinne einer Edelsteintherapie ausüben. So können die enthaltenen kleinen Körper (Teilchen, Partikel) nach der über Jahrhunderte überprüften Chakren-Lehre einen begünstigenden Einfluß auf die Funktionen der fundamentalen und lebenswichtigen Bereiche des Organismus sowie auf das seelische und geistige Leben des Benutzers ausüben.

Ein weiterer bedeutender Vorteil des erfindungsgemäßen Kunststoffes und der daraus hergestellten Waren ist in deren ausgesprochen niedrigem Wärmeausdehnungskoeffizienten zu sehen, welcher ihren Einsatz selbst bei der Herstellung beispielsweise von langdimensionierten Bauteilen für sehr breite Temperaturbereiche erlaubt.

## Patentansprüche

1. Formkörper, **dadurch gekennzeichnet, daß** er neben einem oder mehreren abgewandelten Naturstoffen oder synthetischen Kunststoffen einen oder mehrere kleine Körper (Partikel, Teilchen) enthält, welche ausgewählt sind aus der Gruppe, die Achat, Adular, afrikanische Jade, Aktinolith, Alexandrit, Almandin, Amazonit, Amethyst, Ametrin, Amorspfeil, Amphibol, Andalusit, Andenopal, Andradit, Anhydrit, Antimonit, Apachentränen, Apatit, Apophyllit, Aprikosenachat, Aquamarin, Aragonit, Astrophyllit, Augenachat, Augit, australischer Rhyolith, Australit, Aventurin, Azurit, Azur-Malachit, Bandachat, Baryt, Bediasit, Bergkristall, Bernstein, Beryll, Billitonit, Biotit, Bixbit, Blue John, Blutjaspis, böhmischer Granat, Bornit, Botswana-Achat, Boulder-Opal, Brasilianit, Bronzit, Bytownit, Calcit, Cavansit, Chalcedon, Chalcedonrose, Chiastolith, Chloropal, Chromdiopsid, Chrysoberyll, Chrysokoll, Chrysolith, Chrysopal, Chrysopras, Citrin, Coelestin, Cordierit, Covellin, Cyanit, Cymophan, Demantoid, Dendritenachat, Dendritenchalcedon, Dendritopal, Diamant, Diopsid, Dioptas, Disthen, Dolomit, Dravit, Dumortierit, Edelopal, Eisenkiesel, Eisenmeteorit, Eisenquarz, Elbait, Enstatit, Epidot, Eudialyt, Euklas, Falkenauge, Fernsehstein, Feuerachat, Feueropal, Feuerstein, Fleischopal, Flint, Fluorit, fossiles Baumharz, Friedensachat, Fuchsit, Gagat, Galenit, Girasol, Gold, Granat, Grossular, Hämatit, Halit, Heliodor, Heliotrop, Herkimer-Quarz, Hermanover Kugeln, Hessonit, Hiddenit, Holzopal, Hornstein, Howlith, Hyalit, Hyazinth, Imperial, Indigolith, Indochinit, lolith, Irgisit, Isländischer Kalk, Ivorit, Jadeit, Jargon, Jaspis, Javait, Karneol, Kascholong, Kassiterit, Kieselholz, Korallen, Kunzit, Kupfer, Kupferchalcedon, Kupferlasur, Labradorit, Lace-Achat, Landschaftsjaspis, Lapislazuli, Larimar, Lasurit, Lazulith, Lebende Steine, Leopardenjaspis, Lepidolith, Libysches Glas, Liddicoatit, Limonit, Magnesit, Magnetit, Mahagoni-Obsidian, Malachit, Manganocalcit, Markasit, Marmarosch-Diamant, Matura-Diamant, Melanit, Meteorite, Mikroklin, Milchopal, Milchquarz, Moldavit, Mondstein, Mookait, Moosachat, Moosopal, Moqui Marbles, Morganit, Morion, Muskovit, Nephrit, Obsidian, Oligoklas, Olivin, Onyx, Opal, Orthoklas, Padparadscha, Pektolith, Peridot, Perlen, Petalit, Phantomquarz, Philippinit, Pietersit, Plagioklas, Plasma, Platin, Pleonast, Popjaspis, Porzellanit, Prasem, Prasopal, Purpurit, Pyknit, Pyrit, Pyromorphit, Pyrop, Quarz, Quarz-Katzenauge, Quarzsubstanzen, Rauchquarz, Regebogen-Obsidian, Rhodochrosit, Rhodolith, Rhodonit, Rhyolith, Rizalit, Rosenquarz, Rubellit, Rubin, Rutil, Rutilquarz, Sagenit, Saphir, Sarder, Sardonyx, Schneeflocken-Obsidian, Schörl, Schwarzer Opal, Schwefel, Selenit, Septarien, Serpentin, Siderit, Silber, Skelettquarz, Smaragd, Smithsonit, Sodalith, Sonnenstein, Spektrolith, Spessartin, Sphalerit, Shen, Spinell, Spodumen, Starlit, Staurolith, Steinsalz, Sternachat, Sternsaphir, Stierauge, Sugilith, Tansanit, Tektite, Thulit, Tigerauge, Tigereisen, Titanit, Topas, Topas Imperial, Trümmerachat, Tsavorit, Tscharoit, Türkis, Turitella-Achat, Turmalin, Turmalinquarz, Ulexit, Unakit, Uvit, Uwarowit, Vanadinit, Variscit, Venushaar, Verdelith, Versteinertes Holz, Vivianit, Vulkanisches Glas, Wachsopal, Watermelon-Turmalin, Wavellit, Wolframit, Wolkenachat, Worobjewit, Wulfenit, Zirkon und Zoisit umfaßt.

2. Formkörper nach Anspruch 1, **dadurch gekennzeichnet, daß** der abgewandelte Naturstoff ausgewählt ist aus der Gruppe, welche Casein-Kunststoffe, Cellulosenitrat, Celluloseacetat, Cellulosemischester und Celluloseether umfaßt.

3. Formkörper nach einem der vorhergehenden Ansprüche, **dadurch gekennzeichnet, daß** der synthetische Kunststoff ausgewählt ist aus der Gruppe, die Polykondensate wie Phenolharz, Harnstoffharz, Thioharnostoffharz, Melaminharz, ungesättigtes Polyesterharz, Alkydharz, Allylharz, Silicon, Polyimid, Polybenzimidazol und Polyamid, Polycarbonat, Polyester, Polyphenylenoxid, Polysulfon, Polyvinylacetal sowie Polymerisate wie Polyethylen, Polypropylen, Poly-1-buten, Poly-4-methyl-1-penten, Ionomere, Polyvinylchlorid, Polyvinylidenchlorid, Polymethyl-methacrylat, Polyacrylnitril, Polystyrol, Polyacetal, Fluorkunststoffe, Polyvinylalkohol, Polyvinylacetat, Poly-p-xylylen und Polyaddukte wie Epoxidharz, vernetze Polyurethane, lineare Polyurethane und chlorierte Polyether, umfaßt.

4. Formkörper nach einem der vorhergehenden Ansprüche, **dadurch gekennzeichnet, daß** der Kunststoff ausgewählt ist aus der Gruppe, die AcrylnitrilButadien-Styrol, Acrylnitril-Methylmethacrylat, Celluloseacetat, Celluloseacetobutyrat, Kresol-Formaldehyd, Carboxymethylcellulose, Casein, Diallylphthalat, Ethylcellulose, Epoxid, expandierbares Polystyrol, Ethylen-Vinylacetat, EthylenVinylalkohol, Tetrafluorethylen-Hexafluorpropylen, Polyethylen hoher Dichte (Hart-PE), Polyethylen niederer Dichte (Weich-PE), Methylmethacrylat-Butadien-Styrol, Methylcellulose, Melamin-Formaldehyd, Polyamid, Polymeres aus ε-Caprolactam, Polykondensat aus Hexamethylendiamin und Adipinsäure, Polyacrylnitril, Polybuten, Polybutylenterephthalat, Polycarbonat, Polychlortrifluorethylen, Polyethylen, chloriertes Polyethylen, Ethylen-Propylen, Polyethylenterephthalat, Phenol-Formaldehyd, Polyimid, Polyisobutylen, Polymethyl-methacrylat, Polyoxymethylen, Polyacetal, Polypropylen, Polyphenylenoxid, Polyphenylensulfid, Polystyrol, Polytetrafluorethylen, Polyurethan, Polyvinylacetat, Polyvinylalkohol, Polyvinylchlorid, Polyvinylidenchlorid, Polyvinylidenfluorid, Polyvinylcarbazol, Polyvinylpyrrolidon, Styrol-Acrylnitril, Polystyrol mit Elastomer auf der Basis von Butadien modifiziert, Silicon, Styrol -α-Methylstyrol, Harnstoff-Formaldehyd und ungesättigte Polyester, umfaßt.

5. Formkörper nach einem der vorhergehenden Ansprüche, **dadurch gekennzeichnet, daß** er zusätzlich einen oder mehrere Farbmittel, Pigmente, optische Aufheller, Blüten- und Pflanzenfarbstoffe, natürliche Farbstoffe oder synthetische Farbstoffe umfaßt, welche in ihrem Farbton in etwa dem ursprünglichen Farbton des Materials der enthaltenen kleinen Körper (Partikel, Teilchen) vor deren Bruch entsprechen.

6. Formkörper nach Anspruch 5, **dadurch gekennzeichnet, daß** der Farbstoff ausgewählt ist aus der Gruppe der natürlichen Farbstoffe, welche Anthocyane, Alizarin, Betalaine, Blauholz, Chlorophyll, Chochenille, Curcuma, Hämoglobin, Indigo, Kermes, Krapp, Lackmus, Orlean, antiker Purpur oder Saflor oder Mischungen hiervon umfaßt, oder daß der Farbstoff aus der Gruppe der synthetischen Farbstoffe ausgewählt ist, welche Anilinblau, Anilinschwarz, Anthracenblau, Bismarckbraun, Chrysoidin, Cibablau, Fuchsin, Hydronblau, Immedialschwarz, Kongorot, Kristallviolett, Malachitgrün, Methylenblau, Methylorange, Methylviolett, Variaminblau oder Viktoriablau oder Mischungen hiervon umfaßt.

7. Formkörper nach einem der vorhergehenden Ansprüche, **dadurch gekennzeichnet, daß** der abgewandelte Naturstoff oder synthetische Kunststoff transparent, opak (undurchsichtig, trübe) oder farbig ist.

8. Formkörper nach einem der vorhergehenden Ansprüche, **dadurch gekennzeichnet, daß** die Größe der kleinen Körper (Partikel, Teilchen) im Siebmaschenbereich von 0,001 mm bis 25,0 mm, vorzugsweise im Bereich von 0,005 bis 20,0 mm, insbesondere im Bereich von 0,009 bis 17,0 mm liegt.

9. Formkörper nach Anspruch 8, **dadurch gekennzeichnet, daß** er kleine Körper (Partikel, Teilchen) in mehlartiger Größe enthält.

10. Formkörper nach einem der vorhergehenden Ansprüche, **dadurch gekennzeichnet, daß** die enthaltenen kleinen Körper (Partikel, Teilchen) jeweils abgerundete Bruchkanten aufweisen.

11. Formkörper, nach einem der vorhergehenden Ansprüche, **dadurch gekennzeichnet, daß** die kleinen Körper (Partikel, Teilchen) -nach der Verfestigung des abgewandelten Naturstoffes oder des synthetischen Kunststoffesdie Oberfläche des Formkörpers nach außen hin zumindest etwas überragen, oder gegenüber der ausgehärteten Kunststoffoberfläche zumindest etwas zurückgesetzt sind oder bündig mit dieser abschließen.

12. Formkörper nach einem der vorhergehenden Ansprüche, **dadurch gekennzeichnet, daß** das Gewichtsverhältnis zwischen den Mengen des abgewandelten Kunststoffes oder des synthetischen Kunststoffes und der Menge der kleinen Körper (Partikel, Teilchen) im Bereich von 1000:1 bis 1:1000, vorzugsweise im Bereich von 600:1 bis 1:600, insbesondere im Bereich von 100:1 bis 1:100, liegt.

13. Formkörper nach einem der vorhergehenden Ansprüche, **dadurch gekennzeichnet, daß** er in Form eines Granulates, eines Stranges, eines Stabes, eines Films, eines Anstrichmittels, einer pastösen Masse, einer Folie, einer Platte, einer Kachel, eines Gitters, eines Bandes, einer Kugel, eines Zylinders oder eines massiven oder hohlen Polyeders ausgebildet ist.

14. Formkörper nach einem der vorhergehenden Ansprüche, **dadurch gekennzeichnet, daß** er ausgebildet ist in Form einer Kupplungsscheibe, eines Zahnrades, einer Führungsrolle, einer Lagerschale, einer Bremsscheibe, von Tafelgeschirr, Kochgeschirr, eines Wärme-Isolations-Behälters, eines Behälters für Haushalt und Küche, einer Vase, einer Handyschale, eines Gehäuses für elektrische oder elektronische Geräte, von Spielzeug, eines Turn- und Sportgerätes, eines Blumenübertopfes, einer Schuheinlage, von Bauteilen von Fahrzeugen zu Lande, zu Wasser oder in der Luft, eines Gegenstandes für die Körper- und Schönheitspflege, eines Möbels, von Baumaterialien, insbesondere langen Bauteilen, welche im Winter beansprucht werden, eines Beleuchtungsmittels, von Brillen, von Schreibgeräten, eines Schlafcontainers, von Sanitär-einrichtungen, chirurgischen, ärztlichen, zahn- und tierärztlichen Instrumenten und Apparaten, künstlichen Gliedmaßen, Augen oder Zähnen, orthopädischen Artikeln, Aquarienkies, Aquaristikzubehör, Terraristikzubehör, Kleintierfreßnäpfen und Kleintierschlafstellen sowie in Form von landwirtschaftlichen Geräten.

15. Formkörper nach einem der vorhergehenden Ansprüche, **dadurch gekennzeichnet, daß** er Mischungen von kleinen Körpern (Partikel, Teilchen) gemäß Anspruch 1 und/oder Mischungen von abgewandelten Naturstoffen oder synthetischen Kunststoffen gemäß den Ansprüchen 2, 3 und 4 und/oder Mischungen der Farbstoffe oder Pigmente gemäß den Ansprüchen 5 und 6 umfaßt.

16. Verfahren zur Herstellung eines Formkörpers nach einem der vorhergehenden Ansprüche, **dadurch gekennzeichnet, daß** zunächst die kleinen Körper (Teilchen, Partikel) des Anspruchs 1 mit den abgewandelten Naturstoffen des Anspruchs 2 und/oder mit den synthetischen Kunststoffen der Ansprüche 3 und 4 vermischt werden und anschließend die Mischung per Spritzgießen, Strangpressen, Gießen, Pressen, Ziehen, Blasen oder Drücken zu einem Formkörper gemäß den Ansprüchen 12 oder 13 weiterverarbeitet wird.
